Europäisches Patentamt

European Patent Office

Office européen des brevets

(19)

(11) Veröffentlichungsnummer: **0 233 176**
**B1**

(12)                   **EUROPÄISCHE PATENTSCHRIFT**

(45) Veröffentlichungstag der Patentschrifft:
17.01.90

(21) Anmeldenummer: 85904089.1

(22) Anmeldetag: 13.08.85

(86) Internationale Anmeldenummer:
PCT/DE 85/00271

(87) Internationale Veröffentlichungsnummer:
WO 86/03831 (03.07.86 Gazette 86/14)

(51) Int. Cl. ⁴: **G 01 D 3/04**, **B 60 C 23/00**,
**B 60 C 23/04**

(54) SENSOR ZUR MESSUNG PHYSIKALISCHER GR SSEN UND VERFAHREN ZUM ABGLEICH DES SENSORS.

(30) Priorität: 19.12.84 DE 3446248

(43) Veröffentlichungstag der Anmeldung:
26.08.87 Patentblatt 87/35

(45) Bekanntmachung des Hinweises auf die Patenterteilung:
17.01.90 Patentblatt 90/03

(84) Bennante Vertragsstaaten:
DE FR GB IT SE

(56) Entgegenhaltungen:
EP-A-0 045 401
EP-A-0 097 479
DE-A-1 922 267
GB-A-2 065 890

(73) Patentinhaber: ROBERT BOSCH GMBH
Postfach 50
D-7000 Stuttgart 1 (DE)

(72) Erfinder: ECKARDT, Dieter
Gubltzenhofstr, 17
D-8500 Nürnberg (DE)
Erfinder: HETTICH, Gerhard
Martin-Renz-Strasse 8
D-8501 Dietenhofen (DE)
Erfinder: SCHMID, Hans-Dieter
Kamenzerstr. 8
D-8500 Nürnberg 60 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

### Stand der Technik

Die Erfindung betrifft einen Sensor zur Messung physikalischer Größen sowie ein Verfahren zum Abgleich der Meßwerte eines solchen Sensors.

Bei bekannten Sensoren, bei denen abhängig von Druckschwankungen oder Temperaturschwankungen der Widerstand des Sensors sich ändert, ist zur Korrektur der unmittelbar vom Sensorelement abgegebenen Meßsignale ein relativ aufwendiges Abgleichnetzwerk erforderlich, mit dem die Sensorkennlinie zu linearisieren, der Temperaturgang zu kompensieren, die Exemplarstreuungen auszuschalten und verschiedene Offsetspannungen abzugleichen sind (Elektronik, Heft 13, 1984, Seite 95). Die verschiedenen Widerstände des Abgleichnetzwerkes, das zuammen mit den Sensorelementen auf einem Chip angeordnet ist, müssen dazu auf einem Meßprüfstand mit einem Laserstrahl abgeglichen werden. Da derartige Sensoren vorwiegend zur Druckmessung und Temperaturmessung an eine digital arbeitende Auswerteschaltung angeschlossen werden, ist es auch bereits bekannt, den Sensor mit einem Mikroprozessor zu einer Funktionseinheit zusammenzufassen, wobei der Mikroprozessor zwischen den Sensorelementen und der Auswerteschaltung eingefügt ist, in dem zur Signalaufbereitung alle zu berücksichtigenden Korrekturgrößen eingegeben werden (ETZ Band 105, 1984, Heft 15, Seite 800 ff). Das Ausgangssignal einer solchen Funktionseinheit ist durch die Signalaufbereitung im Mikroprozessor nicht mehr fehlerbehaftet und kann folglich ohne weitere Korrektur von der Auswerteschaltung zur Meßwertanzeige oder zur Beeinflussung von Regelkreisen und Steuerstrecken weiter verarbeitet werden. Die Auswerteschaltung enthält dabei oftmals mindestens einen weiteren Mikroprozessor oder Mikrocomputer. Auch diese Lösung ist relativ aufwendig, da neben dem in der Auswerteschaltung vorhandenen Mikroprozessor ein zusätzlicher Mikroprozessor auf dem Chip des Sensors benötigt wird.

Eine ähnliche Lösung ist aus der EP-A3-0 097 479 bekannt, wo ein einstellbarer Übertrager für verschiedene Drucksensoren verwendet wird und der einen Mikroprozessor mit verschiedenen Eingangswandlern, Speichern sowie einen Ausgangswandler aufweist. Auch diese Lösung ist aufwendig, da für die weitere Auswertung des Ausgangssignales eine zusätzliche Auswerteschaltung benötigt wird.

Schließlich ist aus der GB-A-2 065 890 eine Sensor-Baueinheit nach dem ersten Teil des Anspruchs 1 mit einem Sensorelement und einem Korrekturspeicher für Nichtlinearitäten bekannt, wobei die Sensorsignale über einen Kanal und eine Schnittstelle auf einen ersten Eingang einer Auswerteschaltung gegeben werden. Die Korrekturdaten werden über weitere Kanäle vom Korrekturspeicher abgerufen und gelangen über die Schnittstelle zur Auswerteschaltung. Diese Lösung erfordert einen erheblichen Leitungsaufwand zwischen der Auswerteschaltung und der Sensor-Baueinheit sowie eine vielpolige Schnittstelle, die nicht nur kostenaufwendig sondern auch sehr störanfällig ist.

Mit der vorliegenden Lösung wird angestrebt, den Sensor mit einem die Korrekturdaten enthaltenden Speicher derart zu einer Baueinheit zusammenzufassen, daß die vorhandene Auswertschaltung auf möglichst einfache und zuverlässige Weise zur Korrektur der Sensorsignale mit verwendbar ist.

### Vorteile der Erfindung

Die erfindungsgemäße Lösung mit den kennzeichnenden Merkmalen des Anspruchs 1 hat den Vorteil, daß lediglich die Korrekturwerte eines jeden Sensors in dem ihm zugeordneten Korrekturspeicher auf der Baueinheit gespeichert und beim Einsatz des Sensors zusammen mit den Sensorsignalen über einen gemeinsamen Ausgang in zeitlicher Folge an die angeschlossene Auswerteschaltung zu übermitteln sind. Auf diese Weise kann die Intelligenz der Auswertschaltung zur Korrektur der vom Sensor abgegebenen Meßsignale mit verwendet werden. Je nach der Speicherkapazität des PROMS kann dabei eine hohe oder sehr hohe Meßgenauigkeit bezüglich der Linearität der Geberkennlinien, des Temperaturganges, der Exemplarstreuungen und der Offsetwerte erreicht werden. Ein weiterer Vorteil besteht darin, daß insbesondere bei hohen Stückzahlen gegenüber den bekannten Lösungen erhebliche Kostenvorteile erzielt werden können, da ein Abgleichnetzwerk oder ein weiterer Prozessor für den Sensorabgleich entfällt.

Durch die in den Unteransprüchen aufgeführten Maßnahmen sind vorteilhafte Weiterbildungen und Verbesserungen der im Hauptanspruch angegebenen Merkmale möglich. Besonders vorteilhaft ist es, die Meßsignale des Sensors und die Korrekturwerte aus dem Speicher über einen gemeinsamen Ausgang bit-seriell oder bit-parallel an die Auswerteschaltung abzugeben. Dabei ist es zweckmäßig, den Ausgang zugleich als Eingang zur Energieversorgung des Sensors und des Speichers zu verwenden. Sollen Meßsignale, wie beispielsweise der Luftdruck oder die Temperatur eines Fahrzeugreifens von einem umlaufenden Sensor auf eine ortsfeste Auswerteschaltung übermittelt werden, so wird zweckmäßigerweise der Ausgang der Baueinheit mit einer Übertragerspule verbunden, die mit einer weiteren, mit der Auswerteschaltung verbundenen Übertragerspule induktiv gekoppelt ist. Dabei ist die Baueinheit des Sensors am Fahrzeugrad so angeordnet, daß die Übertragerspule bei jeder vollen Radumdrehung in mindestens einem Umfangsbereich der anderen in Radnähe ortsfest angeordneten Übertragerspule gegenübersteht. In vorteilhafter Weise ist dabei der Sensor über einen A/D-Wandler mit dem Ausgang verbunden. Sensor, A/D-Wandler, Speicher und Ausgang sind dabei zweckmäßigerweise als Baueinheit auf einem Chip angeordnet oder in hybrider Bauweise vereinigt.

Zur Ermittlung der im PROM abzuspeichernden Korrekturwerte wird in einfacher Weise auf einem Meßprüfstand eine Vielzahl von Meßpunkten durchlaufen. Diese Meßwerte werden dann mit den vorgegebenen, tatsächlichen Meßwerten verglichen und ein Korrekturwert gebildet, der schließlich als Tabellenwert oder als Parameter für eine mathematische Abgleichvorschrift in das PROM eingeschrieben wird.

## Zeichnung

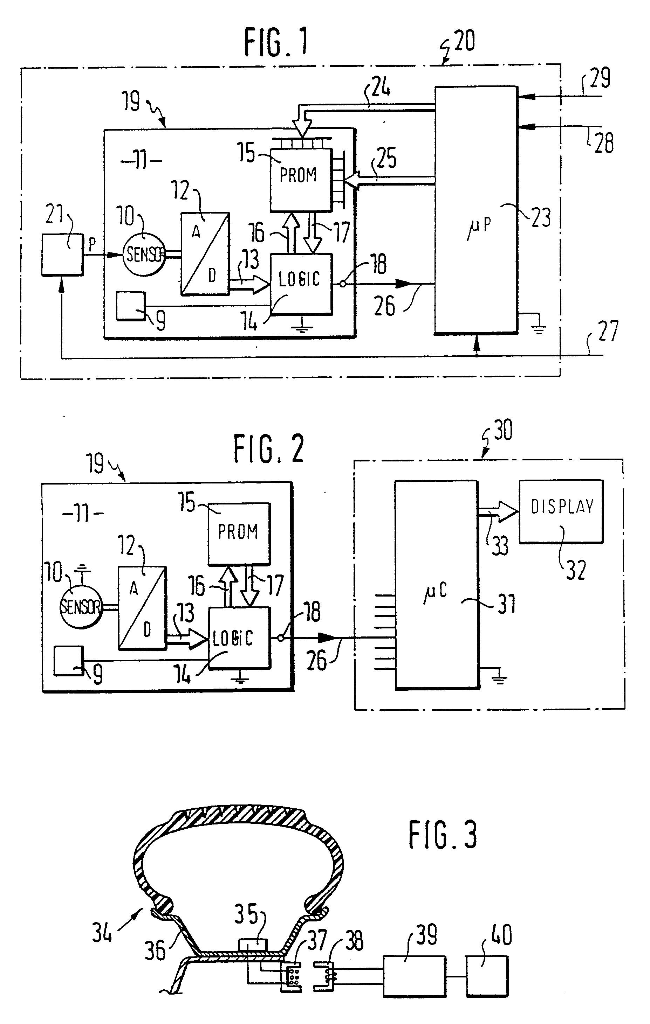

Ausführungsbeispiele der Erfindung sind in der Zeichnung dargestellt und in der nachfolgenden Beschreibung näher erläutert. Es zeigt Figur 1 eine erfindungsgemäße Sensor-Baueinheit mit daran angeschlossener Abgleichschaltung zur Programmierung eines PROMs, Figur 2 zeigt die Sensor-Baueinheit mit angeschlossener Auswerteschaltung und Figur 3 eine Reifendruck-Überwachung mit einer Sensor-Baueinheit nach Figur 1.

## Beschreibung des Ausführungsbeispiels

In den Figuren 1 und 2 ist ein an sich bekannter Drucksensor mit mindestens einem druckabhängig veränderbaren ohmschen Widerstand mit 10 bezeichnet. Der Drucksensor 10 ist auf einem Chip 11 angeordnet, der aus einem elektrisch nicht leitenden Werkstoff besteht. Als Chip 11 kann eine Keramik- oder Kunststoffplatte verwendet werden. Auf dem Chip 11 ist ferner ein Analog/Digital-Wandler 12 angeordnet, dessen Analog-Eingang mit den Anschlüssen des Sensors 10 verbunden ist. Im A/D-Wandler sei gleichzeitig ein Vorverstärker integriert. Der Digital-Ausgang des Wandlers 12 ist über einen Bus 13 mit einer Logik 14 verbunden, die sich ebenfalls auf dem Chip 11 befindet. Des weiteren ist auf dem Chip 11 als programmierbarer, nicht flüchtiger Speicher ein PROM 15 angeordnet, das über weitere Bus-Anschlüsse 16 und 17 mit der Logik 14 verbunden ist. Die Logik 14 ist einerseits auf Masse gelegt und andererseits mit einem Ausgang 18 verbunden. Der Drucksensor 10 bildet zusammen mit dem PROM 15, dem A/D-Wandler 12 und der Logik 14 auf dem Chip 11 eine Baueinheit 19, die zur kontinuierlichen Druckmessung an einer dafür vorgesehenen Meßstelle anzubringen ist.

Da die Sensor-Baueinheit 19 im Ausführungsbeispiel keine eigene Energieversorgung hat sondern lediglich einen Energiespeicher 9, ist hier der Ausgang 18 zugleich als Eingang zur Energieversorgung des Drucksensors 10, des PROMs 15 und des A/D-Wandlers 12 vorgesehen. Der Drucksensor 10 gibt ein von dem auf ihn wirkenden Druck P abhängiges Analogsignal an den A/D-Wandler ab, welches über den Bus 13 als digitales Signal auf die Logik 14 gelangt. Da der Drucksensor 10 durch eine nichtlineare Kennlinie, durch einen Temperaturgang, durch Exemplarstreuungen und durch Offsetspannungen mit individuellen Meßfehlern behaftet ist, sind diese bei der Auswertung der Meßsignale des Drucksensors 10 zu berücksichtigen.

Zu diesem Zweck wird die Sensor-Baueinheit 19 vor ihrer Fertigstellung auf einen in Figur 1 dargestellten Meßprüfstand 20 gebracht, der eine auf den Drucksensor 10 wirkende Druckkammer 21 enthält. Außerdem ist der Meßprüfstand 20 mit einer Abgleichsschaltung 23 versehen, die im Ausführungsbeispiel als Mikroprozessor ausgebildet ist. Der PROM 15 wird zu seiner Programmierung über einen Datenbus 24 und einen Adressbus 25 mit der Abgleichschaltung 23 verbunden. Über eine Leitung 26 ist auch der Ausgang 18 der Sensor-Baueinheit 19 mit der Abgleichschaltung 23 verbunden und damit zugleich die Energieversorgung der Baueinheit 19 über den µP sichergestellt. Über Anschlußleitungen 26, 27 und 28 werden verschiedene Steuerbefehle auf den Meßprüfstand 20 gegeben.

Zum Abgleich der fehlerbehafteten Meßwerte des Drucksensors 10 werden auf dem Meßprüfstand 20 nacheinander mehrere Meßpunkte durchlaufen, indem beispielsweise durch entsprechende Steuerbefehle auf der Anschlußleitung 27 der Druck in der Druckkammer 21 stufenweise auf vorbestimmte Werte erhöht wird. Zu jedem der so durchlaufenen Meßpunkte wird das vom Drucksensor 10 erzeugte Meßsignal über den A/D-Wandler 12, die Logik 14 und die Anschlußleitung 26 als Istwert auf die Abgleichschaltung 23 gegeben. Sie wird dort mit dem über die Anschlußleitung 27 abgerufenen Sollwert des Meßpunktes, der dem tatsächlichen Druck in der Druckkammer 21 entspricht, verglichen. Für jeden Meßpunkt wird auf diese Weise aus dem Istwert und dem Sollwert ein Korrekturwert bzw. eine mathematische Korrekturvorschrift für alle Meßpunkte ermittelt. Bei dem späteren Einsatz des Drucksensors muß der Korrekturwert oder die mathematische Korrekturvorschrift von der Auswerteschaltung jeweils berücksichtigt werden. Über den Datenbus 24 und den Adressbus 25 wird schließlich jeder der so ermittelten Korrekturwerte bzw. die Korrekturvorschrift mit der Abgleichschaltung 23 an einem dem jeweiligen Meßpunkt zugeordneten Speicherplatz im PROM 15 abgespeichert.

Da die vom Sensor 10 abgegebenen Signale oftmals auch noch von weiteren Störgrößen wie z. B. Temperaturschwankungen beeinflußt werden, kann auch dies in analoger Weise ermittelt und berücksichtigt werden. Auf dem Meßprüfstand 20 werden dazu für verschiedene Störgrößen als Parameter die einzelnen Meßpunkte jeweils durchlaufen. In der Abgleichschaltung 23 werden dabei die entsprechenden Korrekturwerte ermittelt und schließlich an entsprechend zugeordneten Speicherplätzen des PROMs 15 abgespeichert. Durch entsprechende Programmierung der Abgleichschaltung 23 ist es möglich, daß zunächst sämtliche Korrekturwerte bzw. die mathematische Korrekturvorschrift für den Drucksensor 10 von der Abgleichschaltung 23 ermittelt und zwischengespeichert werden. Sie können dann anschließend nochmals überprüft, gegebenenfalls berichtigt und schließlich im PROM 15 eingeschrieben werden. Nachdem die Korrekturwerte bzw. die mathematische Korrekturvorschrift im PROM 15 abgespeichert sind, werden Datenbus 24 und Adressbus 35 vom PROM 15 wieder entfernt und in einer letzten Fertigungsstufe werden die elektronischen Bauteile 12, 14 und 15 der Sensor-Baueinheit 19 mit Isolierstoff gekapselt, so daß die Adress- und Dateneingänge des PROMs 15 nun nicht mehr zugänglich sind.

Figur 2 zeigt die fertige Sensor-Baueinheit 19, mit weiteren, nicht dargestellten Sensoren im Kraftfahrzeug an einem ihr zugeordneten Eingang eines Mikrocomputers 31 eines Fahrdatenrechners 30 als Auswerteschaltung angeschlossen ist. Der Mikrocomputer 31 versorgt ein Display 32 über einen Datenbus 33. Im Beispielsfall erfolgt die Energieversorgung des Drucksensors 10 und der elektronischen Bauelemente 12, 14 und 15 über die Anschlußleitung 26 vom Mikrocomputer 31. Über die Anschlußleitung 26 werden außerdem vom Mikrocomputer 31 Steuerbefehle auf die Logik 14 der Sensor-Baueinheit 19 übertragen, durch welche die Logik in der Weise umgeschaltet wird, daß entweder die im PROM 15 abgespeicherten Korrekturdaten oder die im A/D-Wandler 12 umgeformten Sensorsignale seriell an den µC 31 gegeben werden. Der gemeinsame Ausgang 18 der Sensor-Baueinheit 19 ist daher zugleich Eingang zur Energieversorgung der Baueinheit 19 sowie für die Steuerbefehle an die Logik 14. Im Mikrocomputer 31 werden schließlich die digitalen Sensorsignale mit den ihnen zugeordneten Korrekturwerten korrigiert und zur Anzeige gebracht bzw. mit weiteren im Mikrocomputer 31 eingegebenen oder von anderen Sensoren eingelesenen Werten verarbeitet. Die erzielbare Meßgenauigkeit nimmt dabei mit der Anzahl der am Meßprüfstand durchlaufenen Meßpunkte zu. Die Korrekturwerte können dabei in Form von Tabellen oder als mathematische Abgleichvorschrift im PROM 15 abgelegt sein.

Figur 3 zeigt die Anwendung einer erfindungsgemäßen Drucksensor-Baueinheit zur Überwachung des Reifendruckes an einem Kraftfahrzeug. Hier ist eine Sensor-Baueinheit 35 im Bett einer Felge 36 angeordnet. Zur Energieversorgung der Sensor-Baueinheit 35 sowie zur Ausgabe der Meßsignale und der in einem Speicher der Sensor-Baueinheit 35 abgelegten Korrekturwerte dient hier eine an der Felge 36 befestigte Übertragerspule 37, die mit einer weiteren, ortsfest an der Radaufhängung angeordneten Übertragerspule 38 induktiv gekoppelt ist. Die ortsfeste Übertragerspule 38 ist an eine Auswerteschaltung 39 angeschlossen, mit der auch die übrigen, nicht dargestellten Drucksensoren an den anderen Rädern des Fahrzeuges in entsprechender Weise verbunden sind. Der rotierende Teil des Übertragers ist als Ring ausgeführt, so daß der Übertrager unabhängig von der Winkelstellung des Rades arbeitet. Durch einen Sperrwandler 40 wird dabei mit einer Reihe von Impulsen Energie über die Übertragerspulen 38 und 37 auf die Sensor-Baueinheit 35 übertragen. Mit den Impulsen werden frequenzmoduliert außerdem Steuerbefehle der Auswerteschaltung 39 übertragen. Die Übertragung der Meßwerte für den vom Drucksensor gemessenen Reifendruck sowie die Übertragung der im Speicher der Baueinheit 35 abgelegten Korrekturwerte erfolgt ebenfalls mittels einer entsprechend frequenz-modulierten Impulsfolge, die von der Auswerteschaltung 39 empfangen und verarbeitet wird.

Die Erfindung ist nicht auf die beschriebenen Ausführungsbeispiele beschränkt da sowohl an der Sensor-Baueinheit als auch bei der Signalübertragung und Energieversorgung Änderungen möglich sind. Anstelle von Drucksensoren können in gleicher Weise auch Temperatursensoren hergestellt und nach einem entsprechenden Verfahren abgeglichen werden. Der programmierbare, nichtflüchtige Speicher und der Sensor einer solchen Sensor-Baueinheit können getrennt voneinander über die Logik 14 so mit der Auswerteschaltung verbunden werden, daß die Meßsignale des Sensors und die Korrekturwerte des Speichers in Zeitlicher Folge bit-seriell oder bit-parallel auf die Auswerteschaltung übertragen werden.

Erfindungswesentlich ist, daß in dem Speicher der Sensor-Baueinheit die für den Abgleich des Sensorsignals notwendigen Korrekturdaten so abgespeichert sind, daß sie ebenso wie die Sensorsignale über den gemeinsamen Ausgang der Logik an eine Auswerteschaltung übermittelt werden können. Die Sensor-Baueinheit und die Auswerteschaltung stellen dabei zwei an verschiedenen Orten betriebene Systeme dar. Dabei können beispielsweise schon mit dem Einschalten der Versorgungsspannung die im Speicher der Sensor-Baueinheit abgelegten Korrekturdaten oder die dort gespeicherte mathematische Abgleichvorschrift in die Auswerteschaltung eingelesen und zwischengespeichert werden. Danach werden dann nur noch die Meßsignale des Sensors an die Auswerteschaltung übertragen und mit Hilfe der Abgleichdaten wird sodann der genaue Meßwert berechnet.

**Patentansprüche**

1. Sensor zur Messung physikalischer Größen, welcher abhängig von der gemessenen Größe elektrische Meßsignale, die in einer Auswerteschaltung (30, 39) weiter zu verarbeiten sind, abgibt und dessen Sensorelement (10) mit einem programmierbaren, nichtflüchtigen Speicher (15) und einer Logik (14) zu einer Baueinheit (19, 35) zusammengefaßt ist, wobei im Speicher (15) Korrekturdaten für die Meßsignale des Sensorelementes (10) für eine Anzahl von Meßpunkten abgelegt sind, dadurch gekennzeichnet, daß das Sensorelement (10) sowie der Speicher (15) über die zwischen Sensorelement (10) und Speicher (15) umschaltbare Logik (14) auf einen gemeinsamen Ausgang (18) liegen, über den die Meßsignale des Sensorelementes (10) und die Korrekturdaten des Speichers (15) in zeitlicher Folge an die Auswerteschaltung (30, 39) abzugeben sind.

2. Sensor nach Anspruch 1, dadurch gekennzeichnet, daß der Ausgang (18) zugleich als Eingang zur Energieversorgung des Sensorelementes (10), des Speichers (15) und der Logik (14) dient.

3. Sensor nach Anspruch 1 oder 2, dadurch gekennzeichnet, daß der Sensor ein Drucksensor ist und daß der Ausgang (18) aus einer Übertragerspule (37) besteht, die mit einer weiteren, mit der Auswerteschaltung (39) verbundenen Übertragerspule (38) induktiv gekoppelt ist.

4. Sensor nach Anspruch 3, dadurch gekennzeichnet, daß die Baueinheit (35) des Sensors an einem Fahrzeugrad (34) so angeordnet ist, daß die Übertragerspule (37) bei jeder vollen Radumdrehung in mindestens einem Bereich der weiteren, in Radnähe ortsfest angeordneten übertragerspule (38) gegenübersteht.

5. Sensor nach einem der Ansprüche 1 bis 4, dadurch gekennzeichnet, daß dem Sensorelement (10) ein A/D-Wandler (12) nachgeschaltet ist, der gemeinsam mit dem Sensorelement (10) und dem Speicher (15) auf einem Chip angeordnet ist.

6. Sensor nach Anspruch 1 dadurch gekennzeichnet, daß der Speicher (15) und das Sensorelement (10) je einen zur Logik (14) führenden Ausgang (13, 17) haben.

7. Verfahren zum Abgleich der Meßwerte eines Sensors nach Anspruch 1, dadurch gekennzeichnet, daß auf einem Meßprüfstand (20) nacheinander mehrere Meßpunkte der vom Sensorelement (10) zu messenden Größe durchlaufen werden, daß zu jedem Meßpunkt das vom Sensorelement (10) abgegebene Meßsignal als Istwert in einer Abgleichschaltung (23) mit dem Sollwert des Meßpunktes verglichen wird, daß die Abweichung zwischen Istwert und Sollwert jeweils als Korrekturwert ermittelt und daß schließlich mit der Abgleichschaltung die ermittelten Korrekturwerte in dem Speicher (15) der Sensor-Baueinheit (19) abgelegt werden.

8. Verfahren nach Anspruch 7, dadurch gekennzeichnet, daß für verschiedene Störgrößen als Parameter die Meßpunkte mehrfach durchlaufen, entsprechende Korrekturwerte in der Abgleichschaltung (23) ermittelt und schließlich im Speicher (15) der Sensor-Baueinheit (19) abgelegt werden.

9. Verfahren nach Anspruch 7 oder 8, dadurch gekennzeichnet, daß die von der Abgleichschaltung (23) nacheinander ermittelten Korrekturwerte zunächst zwischengespeichert und abschließend in den Speicher (15) der Sensor-Baueinheit (19) eingeschrieben werden.

**Claims**

1. Sensor for measuring physical magnitudes which outputs electrical measurement signals, which are to be processed further in an evaluation circuit (30, 39), as a function of the measured magnitude, and the sensor element (10) of which is combined with a programmable, non-volatile memory (15) and a logic unit (14) to form a unit (19, 35), correction data for the measurement signals of the sensor element (10) being stored in the memory (15) for a number of measuring points, characterized in that the sensor element (10) as well as the memory (15) are connected, via the logic unit (14) which can be switched over between sensor element (10) and memory (15), to a common output (18), via which the measurement signals of the sensor element (10) and the correction data of the memory (15) are to be output in chronological order to the evaluation circuit (30, 39).

2. Sensor according to claim 1, characterized in that the output (18) serves at the same time as input for energy supply of the sensor element (10), of the memory (15) and of the logic unit (14).

3. Sensor according to claim 1 or 2, characterized in that the sensor is a pressure sensor, and in that the output (18) consists of a transmitter coil (37) which is inductively coupled to a further transmitter coil (38) connected to the evaluation circuit (39).

4. Sensor according to claim 3, characterized in that the unit (35) of the sensor is arranged on a vehicle wheel (34) in such a manner that, for each full rotation of the wheel, the transmitter coil (37) is opposite the further transmitter coil (38), arranged so as to be stationary in the vicinity of the wheel, in at least one region.

5. Sensor according to one of claims 1 to 4, characterized in that there is connected following the sensor element (10) an A/D converter (12) which is arranged on a chip together with the sensor element (10) and the memory (15).

6. Sensor according to claim 1, characterized in that the memory (15) and the sensor element (10) each have an output (13, 17) leading to the logic unit (14).

7. Method for adjusting the measured values of a sensor according to claim 1, characterized in that several measuring points of the magnitude to be measured by the sensor element (10) are successively run through on a measurement test stand (20), in that for each measuring point the measurement signal output by the sensor element (10) is compared as an actual value with the desired value of the measuring point in an adjusting circuit (23), in that the deviation between actual value and desired value is determined in each case as a correction value, and in that finally with the adjusting circuit the correction values determined are stored in the memory (15) of the sensor unit (19).

8. Method according to claim 7, characterized in that, for various disturbance variables as parameters, the measuring points are run through several times, corresponding correction values are determined in the adjusting circuit (23) and are finally stored in the memory (15) of the sensor unit (19).

9. Method according to claim 7 or 8, characterized in that the correction values successively determined by the adjusting circuit (23) are first of all temporarily stored and finally written into the memory (15) of the sensor unit (19).

**Revendications**

1. Sonde de mesure de grandeurs physiques, qui délivre en fonction des signaux électriques de mesure venant des grandeurs mesurées, qui sont à traiter ultérieurement dans un circuit d'exploitation (30, 39), et dont la sonde (10) est associée à une mémoire programmable non volatile (15) et à un circuit logique (14) pour former un bloc-sonde (19, 35), où dans la mémoire (15) sont stockées des données de correction pour les signaux de mesure de la sonde (10) pour un certain nombre de points de mesure, caractérisé en ce que la sonde (10) ainsi que la mémoire (15) se situent sur une sortie commune qui peut être reliée par le circuit logique (14) entre la sonde (10) et la mémoire (15), sortie par laquelle les signaux de mesure de la sonde (10) et les données de correction de la mémoire (15) sont délivrés successivement dans le temps sur le circuit d'exploitation (30, 39).

2. Sonde selon la revendication 1, caractérisée en ce que la sortie (18) sert simultanément d'entrée à l'alimentation en énergie de l'élément de saisie (10), de la mémoire (15) et du circuit logique (14).

3. Sonde selon la revendication 1 ou 2, caractérisée en ce que la sonde est une sonde de pression et que la sortie (18) est constituée d'une bobine de transmission (37) qui est couplée inductivement à d'autres.bobines de transmission (38) reliées au circuit d'exploitation (39).

4. Sonde selon la revendication 3, caractérisée en ce que le bloc (35) de la sonde est placé sur une roue de véhicule automobile (34) de telle sorte que la bobine de transmission (37) à chaque tour complet de roue se trouve en face au moins dans une zone de l'autre bobine (38) placée à poste fixe au voisinage de la roue.

5. Sonde selon l'une des revendications 1 à 4, caractérisée en ce qu'un convertisseur analogiqué-numérique (12) est branché en aval de la sonde (10) qui est placée en même temps que ce dernier et la mémoire (15) sur une puce.

6. Sonde selon la revendication 1, caractérisée en ce que la mémoire (15) et la sonde (10) ont en commun une sortie (13, 17) conduisant à un circuit logique (14).

7. Procédé d'égalisation des valeurs de mesure d'une sonde selon la revendication 1, caractérisé en ce que sur un banc d'essai (20) on réalise successivement plusieurs points de mesure des grandeurs à mesurer à partir de la sonde (10), en ce qu'à chaque point de mesure qui est comparé au signal de mesure fourni par la sonde (10) comme valeur instantanée dans un circuit d'égalisation à la valeur de consigne du point de mesure, en ce que l'écart entre la valeur instantanée et la valeur de consigne est déterminé chaque fois comme valeur de correction et en ce que finalement par le circuit d'égalisation, les valeurs de correction déterminée sont stockées dans la mémoire (15) du bloc-sonde (19).

8. Procédé selon la revendication 7, caractérisé en ce que pour des grandeurs parasites différentes, comme paramètres, les points de mesure sont effectués plusieurs fois, les valeurs de correction correspondantes sont déterminées dans le circuit d'égalisation (23) et sont finalement stockées dans la mémoire (15) du bloc-sonde (19).

9. Procédé selon la revendication 7 ou 8, caractérisé en ce que les valeurs de correction déterminées successivement à partir du circuit d'égalisation sont d'abord stockées temporairement et ensuite sont transcrites dans la mémoire (15) du bloc-sonde (19).

**FIG.1**

**FIG.2**

**FIG.3**